# EUROPEAN PATENT APPLICATION

(11) **EP 4 040 134 A1**
(43) Date of publication of application: **10.08.2022**
(21) Application number: 20870692.9
(22) Date of filing: 14.09.2020
(51) Int. Cl.: G01M 13/00, G06N 20/00

(54) **REMAINING LIFE PREDICTION SYSTEM, REMAINING LIFE PREDICTION DEVICE, AND REMAINING LIFE PREDICTION PROGRAM**

(30) Priority: 30.09.2019 JP 2019180234
(71) Applicant: OSAKA UNIVERSITY, Suita-shi Osaka 565-0871 (JP); NTN Corporation, Osaka-shi, Osaka 550-0003 (JP)
(72) Inventor: FUKUI, Ken-ichi, Suita-shi, Osaka 565-0871 (JP); KITAI, Masashi, Suita-shi, Osaka 565-0871 (JP)
(74) Representative: Eisenführ Speiser
(86) International application number: PCT/JP2020/034760
(87) International publication number: WO 2021/065449

(57) **Abstract**

A remaining life prediction system (100) includes: a training information obtaining unit (110) that obtains training deterioration amount information, a training feature vector, and a training remaining life; a first regression model training unit (120) that trains a first regression model that estimates a deterioration amount based on the training feature vector and the training deterioration amount information; a second regression model training unit (150) that trains a second regression model that estimates a remaining life based on the training deterioration amount information and the training remaining life; an evaluation information obtaining unit (130) that obtains an evaluation feature vector; and a remaining life derivation unit (140) that estimates evaluation deterioration amount information by the first regression model, and derives a remaining life by the second regression model.

## Description

### [Technical Field]

The present invention relates to a remaining life prediction system, a remaining life prediction device, and a remaining life prediction program that predict an amount of time until an operation mechanism operates to an operating limit. The operation mechanism includes two components that operate relative to each other in a state in which the two components are in contact with each other.

### [Background Art]

An amount of time until the limit of use, what is called a life span, is estimated for an operation mechanism in which a first component and a second component operate relative to each other, such as an outer ring and a rolling element, and an inner ring and a rolling element of a rolling bearing.

For example, Patent Literature (PTL) 1 describes a method for estimating a level of a defect and a remaining life of a bearing, based on features obtained from a vibration sensor. Furthermore, PTL 2 describes a method for predicting a fault. In this method, a state variable calculated from data output from a sensor is associated with a degree of fault and training by machine learning is performed.

### [Citation List]

### [Patent Literature]

[PTL 1] Japanese Unexamined Patent Application Publication No. 2017-219469
[PTL 2] Japanese Patent No. 6148316

### [Summary of Invention]

### [Technical Problem]

However, under conditions where the speed of progress of deterioration changes from an initial stage to an end stage, it is difficult to estimate a remaining life directly from the vibration features.

The present invention has been conceived in view of the above, and aims to provide a remaining life prediction system, a remaining life prediction device, and a remaining life prediction program that can estimate a remaining life until an operating limit with high accuracy, even for an operation mechanism whose speed of progress of deterioration changes.

### [Solution to Problem]

In order to achieve the above, a remaining life prediction system that is one aspect of the present invention is a remaining life prediction system that predicts a remaining life that is an amount of time until an operation mechanism operates to an operating limit, the operation mechanism including a first component and a second component that operate relative to each other. The remaining life prediction system includes: a training information obtaining unit configured to obtain, through operation of an operation mechanism for training to an operating limit, (i) training deterioration amount information indicating a deterioration amount due to operation of at least one of a first component for training or a second component for training at each of points of time until the operating limit, (ii) a training feature vector obtained through operation of the operation mechanism for training, and (iii) a training remaining life, the training remaining life being an amount of time from a point of time of obtainment of information until the operating limit; a first regression model training unit configured to train a first regression model that estimates a deterioration amount based on the training feature vector and the training deterioration amount information; a second regression model training unit configured to train a second regression model that estimates a remaining life based on the training deterioration amount information and the training remaining life; an evaluation information obtaining unit configured to obtain an evaluation feature vector obtained through operation of an operation mechanism for evaluation that is of a same type as the operation mechanism for training; and a remaining life derivation unit configured to: estimate evaluation deterioration amount information of the operation mechanism for evaluation by the first regression model trained by the first regression model training unit by inputting the evaluation feature vector; and derive a remaining life of the operation mechanism for evaluation by the second regression model trained by the second regression model training unit by inputting the evaluation deterioration amount information obtained.

In order to achieve the above, a remaining life prediction device that is one aspect of the present invention is a remaining life prediction device that predicts a remaining life that is an amount of time until an operation mechanism operates to an operating limit, the operation mechanism including a first component and a second component that operate relative to each other. The remaining life prediction device includes: an evaluation information obtaining unit configured to obtain an evaluation feature vector obtained through operation of an operation mechanism for evaluation; and a remaining life derivation unit configured to: estimate evaluation deterioration amount information of the operation mechanism for evaluation by a first regression model that is trained by inputting the evaluation feature vector and is trained based on (i) a training feature vector obtained through operation of an operation mechanism for training and (ii) training deterioration amount information indicating a deterioration amount due to operation of at least one of a first component for training or a second component for training at each of points of time until an operating limit; and derive a remaining life of the operation mechanism for evaluation by a second regression model that is trained by inputting the evaluation deterioration amount information obtained and is trained based on the training deterioration amount information and a training remaining life, the training remaining life being an amount of time from a point of time of obtainment of information until the operating limit.

In order to achieve the above, a remaining life prediction program that is one aspect of the present invention is a remaining life prediction program for predicting a remaining life that is an amount of time until an operation mechanism operates to an operating limit, the operation mechanism including a first component and a second component that operate relative to each other. The remaining life prediction program is configured to cause a computer to cause : an evaluation information obtaining unit to obtain an evaluation feature vector obtained through operation of an operation mechanism for evaluation; and a remaining life derivation unit to: estimate evaluation deterioration amount information of the operation mechanism for evaluation by a first regression model that is trained by inputting the evaluation feature vector and is trained based on (i) a training feature vector obtained through operation of an operation mechanism for training and (ii) training deterioration amount information indicating a deterioration amount due to operation of at least one of a first component for training or a second component for training at each of points of time until an operating limit; and derive a remaining life of the operation mechanism for evaluation by a second regression model that is trained by inputting the evaluation deterioration amount information obtained and is trained based on the training deterioration amount information and a training remaining life, the training remaining life being an amount of time from a point of time of obtainment of information until the operating limit.

### [Advantageous Effects of Invention]

The present invention makes it possible to estimate a remaining life until an operating limit with high accuracy, based on feature vectors obtained through operation of an operation mechanism, even for an operation mechanism whose speed of progress of deterioration changes.

### [Brief Description of Drawings]

[FIG. 1]

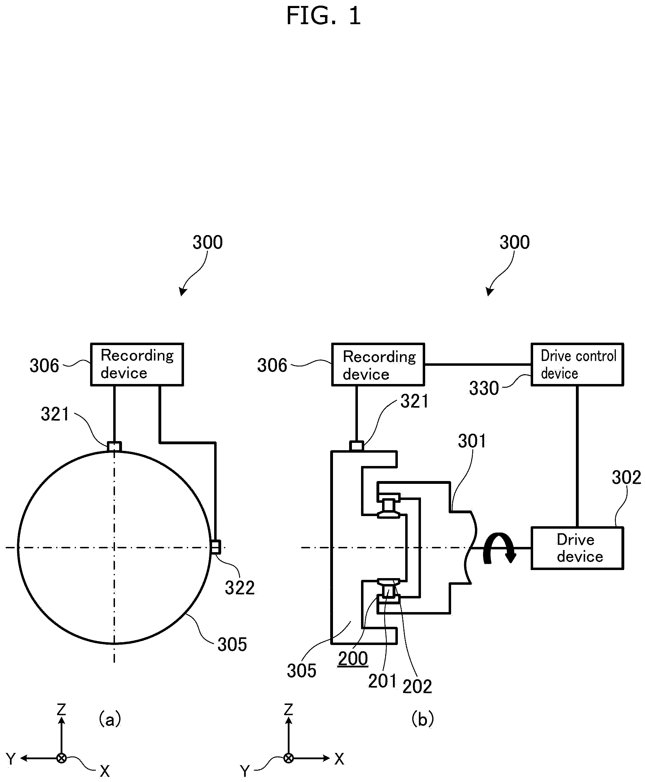

   FIG. 1 illustrates main parts of a training information generation device used in an embodiment. In the figure, (a) is a front view of the training information generation device and (b) is a sectional side view corresponding to (a).
[FIG. 2]

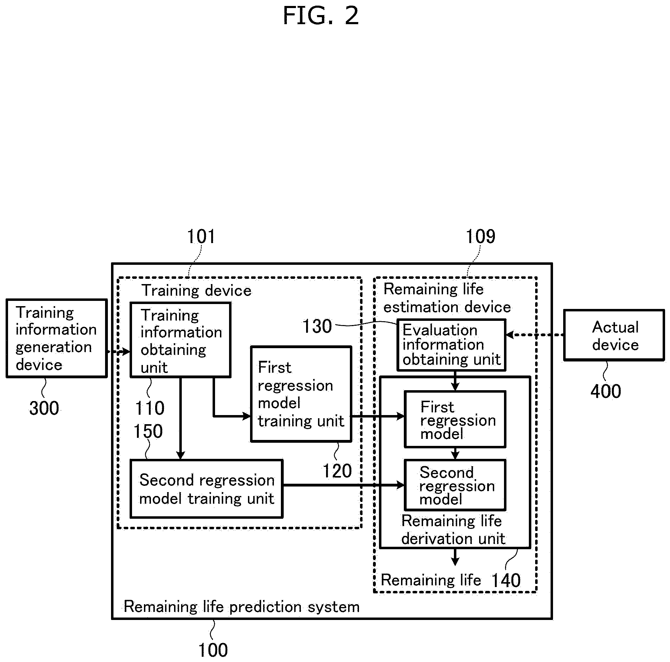

   FIG. 2 is a block diagram of a configuration of a remaining life prediction system according to the embodiment.

### [Description of Embodiments]

The following describes an embodiment of a remaining life prediction system, a remaining life prediction device, and a remaining life prediction program according to the present invention, with reference to the drawings. Note that, the numerical values, shapes, materials, structural elements, the arrangement and connection of the structural elements, steps, the order of the steps, etc. mentioned in the following embodiment are mere examples and not intended to limit the present invention. In addition, several aspects of the present invention may be described as an embodiment below, but structural elements not recited in the claims are described as optional structural elements of the invention pertaining to the aspects of the claims. In addition, each of the drawings is a schematic representation of the invention, with emphasis, omission, and/or adjustment of the ratio as appropriate. The shapes, positional relationships, and ratios, may differ from the actual shapes, positional relationships, and ratios.

Remaining life prediction system 100 is a system that predicts a remaining life. A remaining life is an amount of time until an operation mechanism operates to an operating limit at which the operation mechanism cannot perform a predetermined function as a mechanical element. Any type of operation mechanism is may be used, as long as a first component and a second component operate relative to each other in a state in which the first component and the second component are in contact with each other. In the present embodiment, a rolling bearing is used as an example of the operation mechanism. Moreover, an example of the first component is a rolling element of a rolling bearing, and an example of the second component is an inner ring of the rolling bearing. Note that the rolling bearing also includes a plurality of components, such as an outer ring and a cage, in addition to the rolling element and the inner ring. Although any combination of components may be used as the first component and the second component, it is desirable to use a combination of components whose defect indicating deterioration due to the operation of the operation mechanism is clearly apparent and the amount of defect is easily measured. In this regard, the inner ring of the rolling bearing is suitable as the second component because a defect occurs on its outer circumference surface and the amount of defect is easily measured.

Since remaining life prediction system 100 uses artificial intelligence to predict a remaining life, there are a training phase for training a model and a prediction phase for predicting a remaining life using the trained model. Therefore, an operation mechanism to be used to obtain data for training is referred to as operation mechanism for training 200. A first component included in operation mechanism for training 200 is referred to as first component for training 201. A second component included in operation mechanism for training 200 is referred to as second component for training 202. In addition, an operation mechanism to be predicted is referred to as an operation mechanism for evaluation (not illustrated). A first component included in the operation mechanism for evaluation is referred to as a first component for evaluation. A second component included in the operation mechanism for evaluation is referred to as a second component for evaluation.

Next, training information generation device 300 that obtains training deterioration amount information and training remaining life for training a model in the training phase. FIG. 1 illustrates main parts of the training information generation device according to the embodiment. In the figure, (a) is a front view of the training information generation device and (b) is a sectional side view corresponding to (a).

As illustrated in the figure, training information generation device 300 includes fixing component 305 that holds and fixes second component for training 202, and shaft 301. Shaft 301 includes drive device 302 and drive control device 330.

Fixing component 305 is a structure that supports second component for training 202 and is independent of shaft 301.

Shaft 301 may be made of any material and have any length, etc., as long as shaft 301 has a shape that fits to the inner ring of operation mechanism for training 200. However, it is desirable to match the material and length of shaft 301 with an actual material and length of an operation mechanism for evaluation as much as possible.

Operation mechanism for training 200 is a rolling bearing to be measured. Operation mechanism for training 200 is not limited as described above. In the present embodiment, operation mechanism for training 200 is a roller bearing.

In the present description and the claims, "deterioration" is used to mean that "deterioration" occurring by using an operation mechanism and "deterioration" is an event related to a remaining life of the operating mechanism, and "defect" is described as one type of "deterioration". Specifically, examples of deterioration include fatigue exfoliation, fatigue damage, lubricant deterioration, and surface roughness due to seal failure.

Moreover, a "deterioration amount" quantitatively indicates a defect that occurs on the surface of the first component or the surface of the second component, such as exfoliation, wear, indentation, flaking, and burning. Such a defect occurs due to, for example, sliding motion or rolling-sliding motion between the first component and the second component. Specifically, the "deterioration amount" is one-dimensional information such as a length and width of a region where the defect occurs, two-dimensional information such as an area, three-dimensional information such as a size, or information related to these items of information. Deterioration of a component other than the operation mechanism, such as grease, which deteriorates due to sliding motion between the first component and the second component, is also included in the meaning of the term "degradation amount", as long as the deterioration can be quantified and correlates with the deterioration of the operation mechanism.

Drive device 302 is a device that causes shaft 301 to rotate. Any type of drive device 302 may be used, for example. In the present embodiment, drive device 302 is a servomotor, and the rotary shaft of the servomotor is connected to shaft 301 via a joint. Drive device 302 is controlled by drive control device 330.

Operation mechanism for training 200 is subject to a load from outside via fixing component 305. It is desirable to apply a load similar to a load to be applied when the operation mechanism for evaluation is used.

Any sensor may be used, and a sensor that measures sound may be used, for example. In the present embodiment, a sensor that measures vibration (vibration acceleration) caused by operation mechanism for training 200 by rotation of shaft 301 is used. However, it is generally considered difficult to attach a sensor directly to operation mechanism for training 200. Therefore, in the present embodiment, the vibration sensor is attached to fixing component 305 and vibration caused by other factors is also measured in addition to vibration caused by operation mechanism for training 200.

Any type of sensor may be used. It is desirable to use a sensor of the same type as the sensor attached to actual device 400. In the present embodiment, a sensor that measures vibration acceleration in a uniaxial direction is used. The number of sensors attached to training information generation device 300 is not limited, nor is the location of each sensor. The present embodiment includes first sensor 321 and second sensor 322. First sensor 321 measures vibration in a direction in which a load is applied to operation mechanism for training 200 (the Z-axis direction in the figure), which is a radial direction with respect to the axial direction of shaft 301. Second sensor 322 measures vibration in a direction that is subject to less constraining force (the Y-axis direction in the figure) from outside of the device, extends in the horizontal plane, and is a radial direction perpendicular to the direction of vibration measured by first sensor 321.

In the present embodiment, since the operation mechanisms including the operation mechanism for evaluation are roller bearings, it is assumed that there is no strong correlation between vibration in the axial direction (the Z-axis direction in the figure) and a remaining life. Therefore, a sensor that detects vibration in the axial direction of shaft 301 is not disposed. However, for example, when the operation mechanism is a ball bearing or a cross roller bearing, a third sensor that detects vibration in the axial direction may be disposed.

Recording device 306 is a device that records a signal from a sensor. In the present embodiment, a signal from first sensor 321 and a signal from second sensor 322 are recorded separately. Specifically, for example, recording device 306 digitizes an analog signal from a sensor with a sampling rate of 50 kHz and records the digitized signal. Moreover, recording device 306 records, for example, a value indicating output torque of drive device 302, such as a command value for controlling drive device 302 by drive control device 330.

FIG. 2 is a block diagram of a configuration of a remaining life prediction system according to the embodiment. As illustrated in the figure, remaining life prediction system 100 includes training information obtaining unit 110, first regression model training unit 120, second regression model training unit 150, evaluation information obtaining unit 130, and remaining life derivation unit 140. Moreover, training information obtaining unit 110, first regression model training unit 120, and second regression model training unit 150 function as training device 101. Evaluation information obtaining unit 130 and remaining life derivation unit 140 function as remaining life estimation device 109.

For example, a new operation mechanism for training 200 is caused to operate until an operating limit using training information generation device 300, and training information obtaining unit 110 obtains (i) training deterioration amount information indicating a deterioration amount due to operation of at least one of first component for training 201 or second component for training 202 at each of points of time until the operating limit, (ii) a training feature vector obtained through operation of operation mechanism for training 200, and (iii) a training remaining life. The training remaining life is an amount of time from a point of time of obtainment of information until the operating limit.

The method of obtaining training deterioration amount information, a training feature vector, and a training remaining life may be any method. In the present embodiment, training deterioration amount information, a training feature vector, and a training remaining life are obtained as described below.

Training deterioration amount information is obtained by training information obtaining unit 110. After a new operation mechanism for training 200 is caused to operate for a predetermined time using training information generation device 300, an inner ring, which is second component for training 202, is taken out. A worker measures the deterioration amount and inputs the measured deterioration amount, and thereby training information obtaining unit 110 obtains the deterioration amount that has been input. In the present embodiment, a circumferential length of a defect is used as the training deterioration amount information. Moreover, in order to calculate the training remaining life, an amount of time for which training information generation device 300 operates is associated with the training deterioration amount information and input as a point of time to training information obtaining unit 110.

Next, operation mechanism for training 200 is returned to training information generation device 300 and caused to operate for a predetermined time. Training deterioration amount information and a point of time is input to training information obtaining unit 110 in the same manner. Such operation for a predetermined time and inputting are repeated until the operating limit, and training information obtaining unit 110 obtains training deterioration amount information at each of points of time. Note that a point of time at which operation mechanism for training 200 reaches the operating limit is also input to training information obtaining unit 110.

The "point of time" used in the present description and claims does not mean each moment in actual time, but means each moment (for example, a moment immediately before the operation stops) in accumulated time during which an operation mechanism actually operates.

A training remaining life is obtained by calculating, by training information obtaining unit 110, a difference between a point of time at which the operating limit is reached, which is input by the worker, and a point of time associated with the training deterioration amount information that has been input.

A training feature vector is obtained by training information obtaining unit 110. Training information obtaining unit 110 generates a training feature vector based on, for example, values of a sensor attached to training information generation device 300. In the present embodiment, training information obtaining unit 110 generates a training feature vector based on features that are obtained from, for example, first sensor 321 and second sensor 322, and stored in recording device 306. Specifically, based on a waveform indicating vibration obtained from each of first sensor 321 and second sensor 322 for a predetermined time (e.g., 20 seconds) immediately before training information generation device 300 is stopped to measure a deterioration amount, training information obtaining unit 110 generates a training feature vector based on the following three types of information: (i) time domain information that is a measurement value, (ii) frequency domain information obtained by performing fast Fourier transformation on the time domain information on which envelope processing is performed, and (iii) quefrency domain information obtained by performing fast Fourier transformation on the time domain information on which envelope processing is performed.

Any types of features may be used, and any number of features may be generated. For example, a variety of statistics may be selected and used. Examples of statistics to be used as specific features include an effective value, a maximum value, a crest factor, peakedness, and skewness. Moreover, features may also be statistics each calculated from frequency domain information and quefrency domain information that are generated for each of the frequency bands obtained by dividing time domain information into frequency bands using a bandpass filter, for example.

Note that not only information obtained from first sensor 321 and second sensor 322, but also information related to operation of the operation mechanism, such as a current value indicating torque obtained from drive control device 330, may be used as a feature.

First regression model training unit 120 trains a first regression model for estimating a deterioration amount based on training feature vectors and training deterioration amount information corresponding to the training feature vectors. A training feature vector is a feature vector obtained by training information obtaining unit 110 through operation of operation mechanism for training 200 at each of points of time.

First regression model may be any model. Examples of the first regression model include a random forest, a support vector machine, kernel ridge, and a deep neural network. Moreover, any combination of these is possible.

Second regression model training unit 150 trains a second regression model that estimates a remaining life, based on the training deterioration amount information obtained through operation mechanism for training 200 at each of points of time and based on a training remaining life corresponding to a point of time of obtainment of the training deterioration amount information.

The second regression model may be any model. Examples of the second regression model include a random forest, a support vector machine, kernel ridge, and a deep neural network. Moreover, any combination of these is possible. Moreover, different models may be used as the first regression model and the second regression model, or the same model may be used as the first regression model and the second regression model.

Evaluation information obtaining unit 130 obtains an evaluation feature vector obtained through operation of an operation mechanism for evaluation that is of the same type as operation mechanism for training 200. An evaluation feature vector is obtained by causing the operation mechanism for evaluation included in actual device 400 to operate. Specifically, a measurement value is obtained by each of (i) a sensor that is of the same type as first sensor 321 and attached to a location on actual device 400 corresponding to the location of first sensor 321 attached to training information generation device 300, and (ii) a sensor that is of the same type as second sensor 322 and attached to a location on actual device 400 corresponding to the location of second sensor 322 attached to training information generation device 300. An evaluation feature vector is obtained based on the obtained measurement values. The types of features included in each evaluation feature vector is the same as the types of features used for training the first regression model.

Remaining life derivation unit 140 estimates evaluation deterioration amount information of the operation mechanism for evaluation included in actual device 400 by the first regression model trained by first regression model training unit 120 by inputting the evaluation feature vector obtained and generated by evaluation information obtaining unit 130 based on actual device 400. Remaining life derivation unit 140 derives a remaining life of the operation mechanism for evaluation by the second regression model trained by second regression model training unit 150 by inputting the evaluation deterioration amount information estimated using the first regression model.

The first regression model trained by inputting feature vectors based on operation of the operation mechanism estimates with high accuracy a deterioration amount of an operation mechanism. The second regression model trained by inputting the estimated deterioration amounts estimates a remaining life. With this, a remaining life of the operation mechanism can be estimated with high accuracy and the operation mechanism can be used until a last possible moment until the operation mechanism reaches the operating limit.

In particular, under a use condition that an operation mechanism, such as a rolling bearing, is not required to have a rotational accuracy, the operation mechanism may be continued to be used after a defect occurs. The displacement of the first component and the second component increases as the defect progresses due to a continued use after the defect occurs. When the displacement exceeds tolerance, a device having the operation mechanism attached thereto may reach the operating limit at which the device itself may be destroyed. In remaining life prediction system 100 according to the present embodiment, even when the state of progress of deterioration changes, a remaining life can be estimated accurately for all periods from an initial stage of the progress of deterioration to an end stage of the progress of deterioration that is close to the limit of use.

Note that the present invention is not limited to the above embodiment. For example, another embodiment realized by arbitrarily combining structural elements or excluding some structural elements described in this description may be included as an embodiment of the present invention. Furthermore, variations obtained by various modifications to the foregoing embodiment that can be conceived by a person having ordinary skill in the art, that are within the scope of the present invention, that is, the intended meanings of the recitations of the claims, are also included in the present invention.

For example, training information generation device 300 is not limited to the training information generation device described in the embodiment. Training information generation device 300 may be actual device 400 to which a target operation mechanism is attached whose remaining life is to be predicted or a model imitating actual device 400.

Moreover, the features included in the feature vector need not include all of the features described in the embodiment. For example, one or more features that strongly contribute to estimation of a remaining life may be selected and included in the feature vector. The method of extracting a highly contributing feature may be any method. For example, a contribution degree of each feature may be calculated by artificial intelligence and a predetermined number of features (e.g., 10 features) may be selected in order starting from a feature having the highest contribution degree. Moreover, examples of the features may include output torque of drive device 302, a current value related to the output torque, a power value, and an adulteration amount in grease, for example.

Moreover, the operation mechanism is not limited to a rolling bearing, and may be a ball screw or a linear guide device, for example.

Moreover, remaining life prediction system 100 has been described, but training device 101 and remaining life estimation device 109 may be separate devices.

Moreover, the content executed by training device 101 is a method of producing a first regression model for estimating a remaining life of an operation mechanism and a second model that has been trained.

Moreover, each processing unit included in remaining life prediction system 100 and remaining life estimation device 109 may be achieved by executing a program by a computer.

Moreover, a signal measured by a sensor is not limited to vibration acceleration, and may be a displacement of vibration or a speed of vibration, for example. Not only vibration but also, for example, sound may be measured and used as a signal.

### [Industrial Applicability]

The present invention is applicable to estimation of a remaining life of any type of operation mechanism in which a first component and a second component operate relative to each other, such as a bearing, a ball screw, a linear motion mechanism, and a speed reducer.

### [Reference Signs List]

- 100: remaining life prediction system
- 101: training device
- 109: remaining life estimation device
- 110: training information obtaining unit
- 120: first regression model training unit
- 130: evaluation information obtaining unit
- 140: remaining life derivation unit
- 150: second regression model training unit
- 200: operation mechanism for training
- 201: first component for training
- 202: second component for training
- 300: training information generation device
- 301: shaft
- 302: drive device
- 305: fixing component
- 306: recording device
- 321: first sensor
- 322: second sensor
- 330: drive control device
- 400: actual device

## Claims

1. A remaining life prediction system that predicts a remaining life that is an amount of time until an operation mechanism operates to an operating limit, the operation mechanism including a first component and a second component that operate relative to each other, the remaining life prediction system comprising:
a training information obtaining unit configured to obtain, through operation of an operation mechanism for training to an operating limit, (i) training deterioration amount information indicating a deterioration amount due to operation of at least one of a first component for training or a second component for training at each of points of time until the operating limit, (ii) a training feature vector obtained through operation of the operation mechanism for training, and (iii) a training remaining life, the training remaining life being an amount of time from a point of time of obtainment of information until the operating limit;
a first regression model training unit configured to train a first regression model that estimates a deterioration amount based on the training feature vector and the training deterioration amount information;
a second regression model training unit configured to train a second regression model that estimates a remaining life based on the training deterioration amount information and the training remaining life;
an evaluation information obtaining unit configured to obtain an evaluation feature vector obtained through operation of an operation mechanism for evaluation that is of a same type as the operation mechanism for training; and
a remaining life derivation unit configured to: estimate evaluation deterioration amount information of the operation mechanism for evaluation by the first regression model trained by the first regression model training unit by inputting the evaluation feature vector; and derive a remaining life of the operation mechanism for evaluation by the second regression model trained by the second regression model training unit by inputting the evaluation deterioration amount information obtained.

2. A remaining life prediction device that predicts a remaining life that is an amount of time until an operation mechanism operates to an operating limit, the operation mechanism including a first component and a second component that operate relative to each other, the remaining life prediction device comprising:
an evaluation information obtaining unit configured to obtain an evaluation feature vector obtained through operation of an operation mechanism for evaluation; and
a remaining life derivation unit configured to: estimate evaluation deterioration amount information of the operation mechanism for evaluation by a first regression model that is trained by inputting the evaluation feature vector and is trained based on (i) a training feature vector obtained through operation of an operation mechanism for training and (ii) training deterioration amount information indicating a deterioration amount due to operation of at least one of a first component for training or a second component for training at each of points of time until an operating limit; and derive a remaining life of the operation mechanism for evaluation by a second regression model that is trained by inputting the evaluation deterioration amount information obtained and is trained based on the training deterioration amount information and a training remaining life, the training remaining life being an amount of time from a point of time of obtainment of information until the operating limit.

3. A remaining life prediction program for predicting a remaining life that is an amount of time until an operation mechanism operates to an operating limit, the operation mechanism including a first component and a second component that operate relative to each other, the remaining life prediction program being configured to cause:
an evaluation information obtaining unit to obtain an evaluation feature vector obtained through operation of an operation mechanism for evaluation; and
a remaining life derivation unit to: estimate evaluation deterioration amount information of the operation mechanism for evaluation by a first regression model that is trained by inputting the evaluation feature vector and is trained based on (i) a training feature vector obtained through operation of an operation mechanism for training and (ii) training deterioration amount information indicating a deterioration amount due to operation of at least one of a first component for training or a second component for training at each of points of time until an operating limit; and derive a remaining life of the operation mechanism for evaluation by a second regression model that is trained by inputting the evaluation deterioration amount information obtained and is trained based on the training deterioration amount information and a training remaining life, the training remaining life being an amount of time from a point of time of obtainment of information until the operating limit.
